# EUROPÄISCHE PATENTSCHRIFT

(11) **EP 0 975 130 B1**
(45) Veröffentlichungstag und Bekanntmachung des Hinweises auf die Patenterteilung: **18.10.2006**
(21) Anmeldenummer: 99112656.6
(22) Anmeldetag: 02.07.1999
(51) Int. Cl.: H04M 11/06, H04L 29/06

(54) **Telefonapparat**
Telephone apparatus
Appareil téléphonique

(30) Priorität: 21.07.1998 DE 19832663
(43) Veröffentlichungstag der Anmeldung: 26.01.2000
(73) Patentinhaber: Deutsche Telekom AG, 53113 Bonn (DE)
(72) Erfinder: Schulz-Heyn, Alexander, 27073 Göttingen (DE)

(56) Entgegenhaltungen:
- EP-A- 0 477 775
- EP-A- 0 673 141
- WO-A-96/28928
- WO-A-97/40633
- DE-A- 3 620 938
- US-A- 4 653 086
- HIGAKI S ET AL: "A TELEWRITING SYSTEM ON A LAN USING A PEN-BASED COMPUTER AS THE TERMINAL" BRIDGES BETWEEN WORLDS. AMSTERDAM, APR. 24 - 29, 1993, PROCEEDINGS OF THE CONFERENCE ON HUMAN FACTORS IN COMPUTING SYSTEMS. (INTERCHI), READING, ADDISON WESLEY, US, 24. April 1993 (1993-04-24), Seite 303 XP000473777

## Beschreibung

Die Erfindung betrifft einen Telefonapparat nach dem Oberbegriff des Patentanspruchs 1.

Telefonapparate, wie zum Beispiel das Kirk Delta II haben im allgemeinen eine Tastatur zur Eingabe von Telefonnummern und Funktionstasten. Zur Anzeige bestimmter Funktionen bzw. der eingegebenen Telefonnummern ist meistens ein Display angeordnet und zum Sprechen ein Mikrofon sowie zum Hören ein Hörwandler bzw. Lautsprecher. Außerdem sind noch sogenannte schnurlose Telefone bekannt, die einen Handapparat mit Tastatur und gegebenenfalls auch mit einem Display aufweisen, wobei im Handapparat auch das Mikrofon bzw. der Lautsprecher oder Hörwandler angeordnet ist.

Mit der Übertragungstechnik über Telefonleitungen im Bereich der visuellen Medien kann man mit Faxsendungen Papieraufzeichnung, mit Internet oder BTX elektronische Bildseiten und bei Bildtelefonen auch interaktiv bewegte Bilder von Gesprächsteilnehmern realisieren.

Außerdem sind sogenannte Mobiltelefone bekannt, die drahtlos über digitale Mobilfunknetze verbunden sind. Die Mobilfunknetze entsprechen heute meistens dem sogenannten GSM-Standard (Global System Mobile), wie zum Beispiel derzeit D1, D2 und E+ in Deutschland. Derartige Mobiltelefone sind auch bereits mit Eingabeanordnungen verbindbar, die eine druckintensive Schreibfläche aufweisen, die mit einem Stift beschrieben werden kann. Derartige Einrichtungen für Mobiltelefone sind zum Beispiel im Heft 8, Seite 86 der c't Zeitschrift 1998 beschrieben. Im Heft 11 dieser Zeitschrift, Seite 46, ist auch der weitere bisherige Ausbau mit Zusatzfunktionen und Zusatzanordnungen der normalen althergebrachten Fernsprechgeräte beschrieben.

Trotz des Vorhandenseins von drucksensitiven Schreibflächen und der Verbindung mit Mobiltelefonen ist bisher kein Normaltelefonapparat bekannt geworden, bei dem ein interaktives Schreiben bzw. Skizzieren möglich ist, da eine bloße Übertragung des Prinzips nicht zum Erfolg führen würde.

Aus der Druckschrift US-A-4 653 086 ist beispielsweise ein Telefonapparat mit einer Anzeige bekannt. Diese ist so ausgeführt, daß ein Schreibzug realisierbar ist. Ein Spezialstift wird eingesetzt, welcher über ein Verbindungskabel mit dem Telefon bzw. einem Bauteil des Telefons elektrisch verbunden ist. Durch Kontaktierung des Stiftes mit der Skizzierfläche entstehen Spannungsunterschiede, die von einer Verarbeitungseinheit erfasst werden, um die Stiftposition zu bestimmen. Funktionstasten sowie eine Tastatur werden über die Schreibfläche der Anzeige realisiert.

Aus der WO 97 40633 A ist ein Faxgerät mit integriertem Telefon bzw. ein multifunktionales Kommunikationsgerät mit einer Anzeige mit einer drucksensitiven Skizzierfläche bekannt. Weiterhin umfasst das Gerät Funktionstasten, die als echte Tasten ausgeführt sind, sowie eine echte Tastatur. Das Gerät weist außerdem eine parallele und eine serielle Schnittstelle zum Datenaustausch für z.B. ein Computer oder Drucker auf.

Der Erfindung liegt deshalb die Aufgabe zugrunde, ein Telefon bzw. einen Telefonapparat mit einem schnurlosen Handapparat einerseits so zu modifizieren, daß die Kommunikationsmodalität des interaktiven Schreibens oder Skizzierens auch bei diesen Telefonapparaten bedienerfreundlich realisierbar wird und andererseits, daß der Apparat leicht erweiterbar ist, beispielsweise zu einem Adressbuch, einer Spielkonsole oder dergleichen.

Die erfindungsgemäße Lösung der Aufgabe ist im Kennzeichen des Patentanspruchs 1 charakterisiert.

Weitere Lösungen der Aufgabe sind in den Kennzeichen der Patentansprüche 2 bis 9 charakterisiert.

Durch die angegebene Lösung, nämlich die Verbindung bzw. Integration einer drucksensitiven Schreibfläche mit Stift (Englisch T-Scratchboard) mit einem bzw. in einem Telefon wird die Kommunikationsmodalität des interaktiven Schreibens oder Skizzierens und die Übertragung an Teilnehmer im Telekommunikationsnetz durch ein derart ausgestattetes Analog- oder ISDN-Telefon ohne sonstige Zusatzgeräte möglich. Durch die Anwendung einer drucksensitiven Schreibfläche, die mit einem Stift beschrieben werden kann, mit einem Telefon erfolgt zum Beispiel ein komfortables Übermitteln eines verbal schwer beschreibbaren Sachverhaltes wie mathematische/chemische Formeln, Wegbeschreibungen, Grundrißskizze u.s.w., außerdem ist ein interaktives Online Design ohne weiteres mit dem Telefon möglich. Darüber hinaus ist auch eine lautlose Kommunikation mit einem solch ausgestatteten Telefon möglich, indem eine private Kurznachricht, Geheimzahlen, Gestiksymbole usw. mit Hilfe der drucksensitiven Schreibfläche und des Stiftes aufgezeichnet werden. Auch ist die Eingabe von Unterschriften mit Hilfe eines Telefons damit realisiert. Basierend auf dem ISDN und dem analogen Übertragungssystem ist nunmehr auch eine interaktive Online Schreib-, Skizzier- und Zeichenspielemöglichkeit mit Hilfe eines Telefons realisierbar.

Außerdem ist das Telefon zu einem Adreßbuch, einer Spielkonsole oder dergleichen erweiterbar.

Weitere Vorteile, Merkmale und Anwendungsmöglichkeiten der vorliegenden Erfindung, insbesondere die Anordnung der drucksensitiven und detektierenden Schreib- und Skizzierfläche an bzw. in einem Telefon sowie die Steuerung und Anpassung ergeben sich aus der nachfolgenden Beschreibung und der Zeichnung.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:

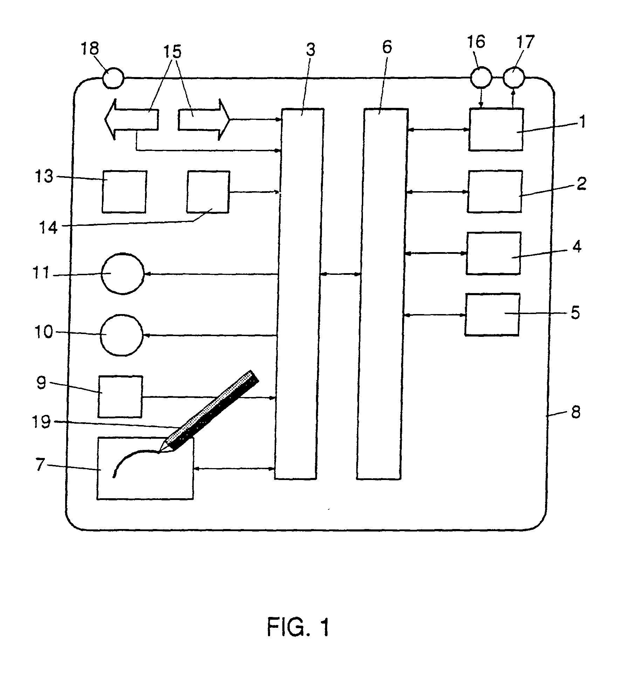

- Fig. 1: ein grundsätzliches Blockdiagramm für zu realisierende Lösungen.

Um ein interaktives Schreiben bzw. Skizzieren mit Hilfe eines Telefons zu realisieren, ist eine handelsübliche drucksensitive und -detektierende Schreibfläche bzw. Skizzierfläche 7 mit dem Telefonapparat verbunden. Eine Variante der Verbindung besteht in der Verbindung über Kabel, eine andere über eine mittels Stecker bzw. steckbar verbindende Ausführung oder eine weitere in einer direkten Integration in den Telefonapparat. Die drucksensitive und -detektierende Schreibfläche 7 wird mit Hilfe eines Stiftes 19 beschrieben. Dabei ist die drucksensitive und detektierende Schreib- und Skizzierfläche 7 transparent ausgeführt und wird einen nicht dargestellten Farb- oder Grautonmonitor vorgesetzt. Mittels des Stiftes 19 kann man auf der drucksensitiven und -detektierenden Schreib- und Skizzierfläche 7 schreiben oder skizzieren, während der Schreibzug bzw. die Skizze mit einem nicht dargestellten LCD-Monitor visualisiert wird. Die genannte Schreib- und Skizzierfläche 7 ist vorteilhaft in Querformat anzuordnen und sollte nicht kleiner als 40 cm² sein. Die Darstellungsauflösung des Monitors und die Empfindlichkeit der drucksensitiven und - detektierenden Schreibfläche ist größer 100 dpi anzusetzen, um eine feine Stiftbreite zu simulieren. Außerdem sind für das einwandfreie Arbeiten eines mit einer Schreib- und Skizzierfläche 7 ausgerüsteten Telefons noch folgende Komponenten gemäß dem Blockdiagramm nach Fig. 1 erforderlich:

Bildverwaltungstasten, mindestens eine Bildspeichertaste 13, mindestens eine Bildlöschtaste 14 sowie Bildauswahltasten 15, die entsprechend die Bildverwaltung, die Bildspeicherung, die Bildlöschung oder die Bildauswahl initialisieren. Außerdem sind auf einer gemeinsamen Karte Schaltungen für den Monitor, für die drucksensitive und -detektierende Schreibfläche 7 und die Kontrolltasten vorhanden. Das Kästchen 4 symbolisiert einen Speicher für mindestens 3 Bilder und das Kästchen 5 einen Mikroprozessor zur Koordination bzw. Steuerung. Als Verbindungsglied für die Komponenten 1 bis 5 dient ein Bus 6, der mit der Karte 3 in Verbindung steht. Zur Ein- und Ausgabe für den Verbindungsstatus sind ein Verbindungswunschschalter 9, eine Verbindungsanzeige 10 zu anderen Schreib- bzw. Skizzierflächen, eine Datentransferleuchte 11 und die Bildverwaltungstasten, die Bildspeichertaste 13, die Bildlöschtaste 14 und die Bildauswahltasten 15 vorhanden. Als Datenschnittstelle bei einem analogen Telefon dienen die mit einem symbolischen Kreis dargestellte Eingabe 16 von einer Telefonbuchse und eine Ausgabe 17 zum Telefonapparat. Die Eingabe 16 und die Ausgabe 17 sind mit der ISDN Telefonschnittstelle bzw. dem Modem bei analogen Telefon 1 verbunden. Die Netzversorgung 18 steht mit allen Komponenten des Blockdiagramms nach Fig. 1 in Verbindung, die durch die Leitung 8 schematisch dargestellt ist. Im nachfolgenden werden nun grundsätzlich die Operationen und Funktionen der einzelnen Komponenten des Blockdiagramms nach Fig. 1 beschrieben. Zunächst wird eine Durchschleifung des Telefonkabels durch die Schreib- und Skizzierfläche 7 realisiert. Dabei wird das Kabel des Telefons an die Schreib- und Skizzierfläche 7 umgesteckt und ein zusätzliches Telefonkabel von der Schreib- und Skizzierfläche 7 zum Telefon installiert.

Danach wird die Stromversorgung der Schreib- und Skizzierfläche 7 eingerichtet. Es soll hier erwähnt sein, daß das Telefonieren auch bei fehlender Stromversorgung zur Schreib- und Skizzierfläche 7 möglich ist.

Zunächst baut ein A-Teilnehmer mit seinem angeschlossenen Telefon eine Telefonverbindung zum zweiten, dem B-Teilnehmer auf. Bei eingeschaltetem Verbindungswunschschalter 9 sendet die Schreib- und Skizzierfläche 7 des A-Teilnehmers eine individuelle Identifikationssequenz über den D-Kanal bei ISDN oder im In-Bandverfahren bei einem Analogtelefon. Während eines gesamten Telefongespräches wartet die Schreib- und Skizzierfläche 7 auf eine Identifikationssequenz der Schreib- und Skizzierfläche 7 des B-Teilnehmers über den D-Kanal bzw. das In-Band. Kommt es innerhalb einer bestimmten Zeit, zum Beispiel einer Minute, nicht zur Verbindung, wird der Verbindungswunschschalter 9 ausgeschaltet und die Verbindungsanzeige 10 zur anderen Schreib- und Skizzierfläche 7 erlöscht. Kommt es hingegen zu einer Verbindung, werden daraufhin weitere Übertragungsbedingungen ausgehandelt bzw. realisiert und der Verbindungswunschschalter 9 wird ausgeschaltet. Die Teilnehmer können jederzeit wieder einen Verbindungsaufbau durch Einschalten des Verbindungsschalters 9 einleiten.

Die Übertragungsbedingungen sind:
- kurze eindeutige Identifikationsnummer der Schreib- und Skizzierfläche 7
- Monitorgeometrie, Darstellungsauflösung, Farben
- Übertragungsgeschwindigkeit

Bei Übertragung von Daten zur Steuerung der jeweils anderen Schreib- und Skizzierfläche 7 leuchtet die Datentransferleuchte 11 auf. Die Übertragung erfolgt über den D-Kanal, sofern beide Teilnehmer über einen ISDN-Telefonanschluß verfügen. Anderenfalls werden die Daten im In-Bandverfahren (während Stille im Sprechkanal) übertragen.

Das Protokoll erlaubt es, unterschiedliche Bild- und Bildaufbauformate zu betreiben. Standard ist der Online Schreibmodus, bei dem Sequenzen von x,y Stiftkoordinaten und Steuerdaten für Stiftabsetzen, Farbwechsel u.s.w. übertragen werden. Bei dem Komplettbildmodus werden Bilder im Bitmap übertragen.

Während des Online Schreibmodus können beide Teilnehmer auf ihrer Schreib- und Skizzierfläche 7 schreiben. Zusätzlich zu den eigenen Schriftaufzeichnungen werden die Schriftaufzeichnungen des anderen Teilnehmers dargestellt.

Löscht einer der Teilnehmer A oder B die Schreib- und Skizzierfläche 7 mit der Löschtaste 14, dann wird auch die Schreib- und Skizzierfläche 7 des anderen Teilnehmers gelöscht. Mit der Speicherbildtaste 13 ist es möglich, zum Beispiel eine Seite zu speichern. Die Bildauswahltasten 15 erlauben es, gespeicherte Bilder auszuwählen und ebenfalls auf beiden Schreib- und Skizzierflächen 7 Geschriebenes bzw. Gezeichnetes anzuzeigen. Grundsätzlich wird hier angenommen, daß im Anzeigemodus beide Schreib- und Skizzierflächen 7, zum Beispiel der Teilnehmer A und B, jederzeit identische Darstellungen haben sollen. Jedoch können auch andere Regelungen getroffen werden, ohne das Prinzip der vorliegenden Erfindung zu verlassen. Im nachfolgenden werden in tabellarischer Form die Ereignisse nach einer Telefongesprächsverbindung und die dazu ausgelösten Programme bzw. Schritte grundsätzlicher Natur angegeben; Variationen der Ereignisse und/oder der ausgelösten Programme sind ohne weiteres möglich.

Wie bereits ausgeführt, kann die Schreib- und Skizzierfläche 7 auch in einen Telefonapparat integriert werden. Dabei wird die drucksensitive und detektierende Schreib- bzw. Skizzierfläche direkt über dem Display angeordnet und zwar als durchsichtige Schicht. Die Anordnung sowohl des Displays als auch der darüber liegenden drucksensitiven und -detektierenden Schreib- und Skizzierfläche 7 erfolgt im Bereich unterhalb der Tastaturen, damit sowohl die Ziffern- als auch die Funktionstasten nicht ungewollt betätigt werden können. Die soeben beschriebene Anordnung ist die bevorzugte, wodurch jedoch andere Anordnungen, wie zum Beispiel rechts von der Tastatur oder links von der Tastatur oder auch in besonderen Fällen oberhalb der Tastatur möglich sind. Durch das Integrieren der drucksensitiven und -detektierenden Schreib- und Skizzierfläche 7 ist kein Verbindungskabel mehr erforderlich und damit auch ein Umstecken der Kabelverbindungen. Außerdem kann die Schreibfläche auch als Nummernblock verwendet werden, unter der Voraussetzung der ausreichenden Stromversorgung für die Schreibfläche.

Telefoneinstellungen sind übersichtlich darstellbar und manipulierbar. Funktionstasten lassen sich auch durch Anordnung an festgelegten Stellen mit der transparenten, drucksensitiven und -detektierenden Schreib- oder Skizzierfläche 7 realisieren.

Außerdem kann man mit einem zusätzlichen Programmiergerät, Tonerzeuger und zusätzlicher Speichereinheit, auch speicherresident, ein Telefon als Spielekonsole und Adreßbuch nutzen. Dazu wird eine Programmkarte in das Programmlesegerät eingeführt, worauf die Schreib- und Skizzierfläche 7 das eingelesene Programm ausführt. Ebenfalls ist es möglich, mit der Schreib- und Skizzierfläche 7 eine Telefonverbindung zu erstellen und weitere Informationen zum Beispiel von einem Server auszutauschen.

Telekommunikationsdienste lassen sich durch die gewonnene Schreib- und Leseeinrichtung mittels der Schreib- und Skizzierfläche 7 wesentlich intuitiver gestalten, wie zum Beispiel:
- Telefonnummernauskunft wird angezeigt
- Kochrezepte, Veranstaltungskalender, Wettervorhersage u.s.w. werden visualisiert
- mittels eines beim Telekommunikationsanbieter installierten Handschriftenerkenners sind handgeschriebene Eingaben in Text ohne weiteres umzuwandeln und zum Beispiel als E-Mail weiterzuleiten
- weitere Internetdienste sind assimiliert auf die Schreib- und Skizzierflächen-Umgebung anwendbar
- Unterschriftsverifikation und E-Cash-Verfahren
- Server für Multi-Useranwendungen (Spiele, Tele-Votum u.s.w.)

### Liste der Bezugszeichen

- 1: ISDN Telefonschnittstelle oder Modem bei analogem Telefon
- 2: Speicher für Übertragungsbedingungen zur verbundenen Schreib- und Skizzierfläche
- 3: Schaltungen für Monitor, drucksensitive und-detektierende Schreibfläche sowie für Kontrolltasten
- 4: Speicher für mindestens drei Bilder
- 5: Mikroprozessor zur Koordination und Steuerung
- 6: Bus
- 7: Drucksensitive und -detektierende Schreib- und Skizzierfläche
- 8: Leitung
- 9: Verbindungswunschschalter
- 10: Verbindungsanzeige zu anderen Schreib- und Skizzierflächen
- 11: Datentransferanzeige
- 12: -
- 13: Bildspeichertaste
- 14: Bildlöschtaste
- 15: Bildauswahltasten
- 16: Eingabe von Telefonbuchse
- 17: Ausgabe zum Telefonapparat
- 18: Netzversorgung
- 19: Stift zum Schreiben

## Patentansprüche

1. Telefonapparat bestehend aus einem Gehäuse mit einer Hörwandleraufnahme bzw. Hörkapsel, einer Mikrofonaufnahme sowie einem schnurlosen oder schnurgebundenen Handapparat, einer Tastatur, einer Anzeigevorrichtung und einer Schaltung (3) mit integrierten elektronischen Bauteilen zum Speichern, zur Umwandlung, zum Verstärken und zum Steuern, sowie einer Anzeige, die zum Schreiben oder Skizzieren mit einer transparenten, drucksensitiven und detektierenden Schreib- und Skizzierfläche (7) versehen ist, die mittels eines Stiftes (19) beschreibbar ist und so ausgeführt ist, dass sie einen Schreibzug mit der darunter angeordneten Anzeigevorrichtung während des Schreibens bzw. Skizzierens visualisiert wobei die transparente, drucksensitive und -detektierende Schreib- und Skizzierfläche (7) mit mindestens einer Funktions- bzw. Kontrolltaste der Tastatur über die Schaltung (3) verbunden ist, **dadurch gekennzeichnet, dass** die Schaltung (3) für die Anzeige, die transparente, drucksensitive bzw. -detektierende Schreib- und Skizzierfläche (7) und die Kontrolltasten einen Mikroprozessor (5) aufweist und der Mikroprozessor (5) über einen Bus (6) mit den genannten Komponenten in Verbindung steht, dass die transparente, drucksensitive und -detektierende Schreib- und Skizzierfläche (7) mit einem zusätzlichen Programmlesegerät, einem Tonerzeuger und einem zusätzlichen Speicher verbunden ist, wobei das Programmlesegerät so ausgeführt ist, dass eine Programmkarte einführbar und lesbar ist, und der Telefonapparat durch ein auf der Programmkarte gespeichertes Programm zu einer Spielkonsole oder zu einem Adressbuch erweiterbar ist, und dass die transparente, drucksensitive und -detektierende Schreib- und Skizzierfläche (7) so ausgeführt ist, dass durch Beschreiben eine Telefonverbindung je nach Wahl erstellbar ist und weitere Informationen mit einem Server austauschbar sind.

2. Telefonapparat nach Patentanspruch 1, **dadurch gekennzeichnet, dass** die Funktions- bzw. Kontrolltasten Bildverwaltungstasten, eine Bildspeichertaste (13), eine Bildlöschtaste (14) und Bildauswahltasten (15) umfassen und dass der Telefonapparat außerdem mit einer ISDN Telefonschnittstelle (1) ausgerüstet ist.

3. Telefonapparat nach Patentanspruch 1 und 2, **dadurch gekennzeichnet, dass** die Funktions- bzw. Kontrolltasten mit Hilfe des Mikroprozessors (5) auf der transparenten, drucksensitiven und -detektierenden Schreib- und Skizzierfläche (7) dargestellt sind.

4. Telefonapparat nach einem der Patentansprüche 1 bis 3, **dadurch gekennzeichnet, dass** bei getrennt angeordneter Anzeige mit vorgesetzter transparenter, drucksensitiver und druckdetektierender Schreib- und Skizzierfläche (7) diese derart ausgeführt ist, dass ein Kabel des Telefonapparates umgesteckt ist und ein zusätzliches Kabel von der Schreib- und Skizzierfläche (7) zum Telefon angeordnet ist.

5. Telefonapparat nach einem der Patentansprüche 1 bis 4, **dadurch gekennzeichnet, dass** die transparente Schreib- und Skizzierfläche (7) im Querformat und unterhalb der Tastatur und der Funktionstasten des Telefonapparates angeordnet ist.

6. Telefonapparat nach einem der Patentansprüche 1 bis 5, **gekennzeichnet durch** eine Ausführung derart, dass ein einem A-Teilnehmer zugeordnetes Telefon eine Telefonverbindung zu einem Telefon eines B-Teilnehmers aufbaut, dass bei eingeschaltetem Verbindungswunschschalter (9) die Schreib- und Skizzierfläche (7) des A-Teilnehmers eines individuelle Identifikationssequenz über den D-Kanal bei ISDN oder im In-Bandverfahren bei einem Analog-Telefon aussendet, dass während des Telefongesprächs die Schreib- und Skizzierfläche (7) des A-Teilnehmers auf eine Identifikationssequenz der Schreib- und Skizzierfläche (7) des B-Teilnehmers wartet, dass bei Nichtzustandekommen einer Verbindung in einem bestimmten Zeitraum der Verbindungswunschschalter (9) ausgeschaltet wird, während bei Zustandekommen einer Verbindung die weiteren Übertragungsbedingungen wie kurze, eindeutige Identifikationsnummer der Schreib- und Skizzierfläche (7), der Monitorgeometrie, der Darstellungsauflösung, der Farben und der Übertragungsgeschwindigkeit **durch** den Mikroprozessor (5) und den damit verbundenen Komponenten automatisch abgestimmt und festgelegt werden.

7. Telefonapparat nach einem der Patentansprüche 1 bis 6, **gekennzeichnet durch** eine Ausführung des Telefonapparates derart, dass ein intern automatisch auflaufendes Protokoll unterschiedliche Bild- und Bildaufbauformate nach Wahl steuert, dass im Online Schreibmodus Sequenzen von x, y Stifkoordinaten und Steuerdaten zum Beispiel für Stiftabsetzen und Farbwechsel übertragen werden und dass während des Online Schreibmodus die Schreib- und Skizzierflächen (7) mindestens zweier Teilnehmer beschreibbar sind und die Aufzeichnungen des bzw. der anderen Teilnehmers bzw. Teilnehmer zu den eigenen Schriftaufzeichnungen darstellbar sind.

8. Telefonapparat nach einem der Patentansprüche 1 bis 7, **gekennzeichnet durch** eine Ausführung derart, dass eine Bildlöschtaste (14) in ihrer Wirkung so in die Programmsteuerung integriert ist, dass beim Drücken eines Teilnehmers beide bzw. alle Schreib- und Skizzierflächen (7) löschbar sind, dass eine Bildspeichertaste (13) beim Drücken eine Seite abspeichert, dass Bildauswahltasten (15) auf eine, beiden oder mehreren Schreib- bzw. Skizzierfläche(n) (7) anzeigbar sind und dass in einem Anzeigemodus grundsätzlich alle Schreib- und Skizzierflächen (7) zu jeder Zeit identische Darstellungen aufweisen.

## Claims

1. Telephone instrument comprising a housing with a receiver transducer receptacle or receiver capsule, a microphone receptacle, a cordless or corded handset, a keyboard, a display device, and a circuit (3) with integrated electronic components for storage, conversion, amplification and control, and also comprising a display provided with a transparent, pressure-sensitive and pressure-detecting writing and sketching surface (7) that can be written by means of a stylus (19) and is designed to visualize a written stroke with the display device located thereunder during writing or sketching, wherein the transparent, pressure-sensitive, pressure-detecting writing and sketching surface (7) is connected through the circuit (3) to at least one function key or control key of the keyboard, **characterized in that** the circuit (3) for the display, for the transparent, pressure-sensitive, pressure-detecting writing and sketching surface (7), and for the control keys has a microprocessor (5), and the microprocessor (5) stands in connection with the aforementioned components through a bus (6), **in that** the transparent, pressure-sensitive, pressure-detecting writing and sketching surface (7) is connected to an additional program reader device, a tone generator, and an additional memory, wherein the program reader device is designed such that a program card can be introduced and read, and the telephone instrument can be expanded into a game console or address book by a program stored on the program card, and **in that** the transparent, pressure-sensitive, pressure-detecting writing and sketching surface (7) is designed such that writing can cause a telephone connection to be established as selected and additional information to be exchanged with a server.

2. Telephone instrument according to claim 1, **characterized in that** the function or control keys include image management keys, an image storage key (13), an image deletion key (14), and image selection keys (15), and **in that** the telephone instrument is additionally equipped with an ISDN telephone interface (1).

3. Telephone instrument according to claims 1 and 2, **characterized in that** the function or control keys are represented on the transparent, pressure-sensitive, pressure-detecting writing and sketching surface (7) with the aid of the microprocessor (5).

4. Telephone instrument according to any one of claims 1 through 3, **characterized in that** for the case of a separate display with a transparent, pressure-sensitive, pressure-detecting writing and sketching surface (7) arranged in front of it, said surface is designed such that a cable of the telephone instrument is connected to a different connection and an additional cable is arranged from the writing and sketching surface (7) to the telephone.

5. Telephone instrument according to any one of claims 1 through 4, **characterized in that** the transparent, pressure-sensitive, pressure-detecting writing and sketching surface (7) is arranged in a wide format below the keyboard and function keys of the telephone instrument.

6. Telephone instrument according to any one of claims 1 through 5, **characterized by** a design such that a telephone associated with a subscriber A establishes a connection to a telephone of a subscriber B; that when the connection acceptance switch (9) is switched on, the writing and sketching surface (7) of the subscriber A transmits an individual identifying sequence through the D channel for ISDN, or by an in-band method for an analog telephone; that the writing and sketching surface (7) of the subscriber A waits for an identifying sequence from the writing and sketching surface (7) of the subscriber B during the telephone call; that the connection acceptance switch (9) is switched off if no connection is established within a certain time period, but if a connection is established, the further transmission conditions, such as short, unique identifying numbers of the writing and sketching surface (7), the monitor geometry, the display resolution, the colors, and the transmission speed are automatically coordinated and specified by the microprocessor (5) and the associated components.

7. Telephone instrument according to any one of claims 1 through 6, **characterized by** a design of the telephone instrument such that an automatically executed internal protocol controls different image formats and image structure formats as desired; that in the online writing mode, sequences of x, y stylus coordinates and control data, for example for stylus lifting and color change, are transmitted; and that during the online writing mode the writing and sketching surfaces (7) of at least two subscribers are writable and the drawings of the other subscriber or subscribers can be represented on the first subscriber's drawings.

8. Telephone instrument according to any one of claims 1 through 7, **characterized by** a design such that the function of an image deletion key (14) is integrated in the program controller in such a way that when the key is pressed by one subscriber, both or all writing and sketching surfaces (7) can be erased; that an image storage key (13) stores a page when pressed; that image selection keys (15) can be displayed on one, both, or multiple writing and sketching surfaces (7); and that in a display mode all writing and sketching surfaces (7) display identical representations at all times.

## Revendications

1. Appareil téléphonique composé d'un boîtier comportant un logement d'écouteur ou une capsule réceptrice, un logement de microphone ainsi qu'un combiné sans fil ou avec fil, un clavier, un dispositif d'affichage et un circuit (3) à composants électroniques intégrés pour enregistrer, convertir, amplifier et commander, ainsi qu'un affichage muni d'une surface d'écriture et de traçage (7) transparente sensible à la pression et détectant la pression pour écrire ou tracer, inscriptible à l'aide d'un stylet (19) et réalisée de manière à visualiser, à l'aide du dispositif d'affichage disposé au-dessous, un graphisme pendant l'écriture ou le traçage, la surface d'écriture et de traçage (7) transparente sensible à la pression et détectant la pression étant reliée à au moins une touche de fonction ou de contrôle du clavier par l'intermédiaire du circuit (3), **caractérisé en ce que** le circuit (3) comporte un microprocesseur (5) pour l'affichage, la surface d'écriture et de traçage (7) transparente sensible à la pression et détectant la pression et les touches de contrôle, le microprocesseur (5) est en liaison avec lesdits composants par l'intermédiaire d'un bus (6), la surface d'écriture et de traçage (7) transparente sensible à la pression et détectant la pression est reliée à un dispositif de lecture de programme supplémentaire, à un générateur de sons et à une mémoire supplémentaire, le dispositif de lecture de programme étant réalisé de manière à permettre l'introduction et la lecture d'une carte de programme, et à permettre l'extension de l'appareil téléphonique en une console de jeu ou en un carnet d'adresses par un programme enregistré sur la carte de programme, et la surface d'écriture et de traçage (7) transparente sensible à la pression et détectant la pression (7) est réalisée de manière à permettre, par écriture, d'établir une liaison téléphonique au choix et d'échanger d'autres informations avec un serveur.

2. Appareil téléphonique selon la revendication 1, **caractérisé en ce que** les touches de fonction et de contrôle comprennent des touches de gestion d'image, une touche d'enregistrement d'image (13), une touche d'effacement d'image (14) et des touches de sélection d'image (15) et l'appareil téléphonique est en plus muni d'une interface téléphonique RNIS (1).

3. Appareil téléphonique selon les revendications 1 et 2, **caractérisé en ce que** les touches de fonction ou de contrôle sont représentées sur la surface d'écriture et de traçage (7) transparente sensible à la pression et détectant la pression (7) à l'aide du microprocesseur (5).

4. Appareil téléphonique selon l'une des revendications 1 à 3, **caractérisé en ce que**, dans le cas d'un affichage agencé séparément et comportant une surface d'écriture et de traçage (7) transparente sensible à la pression et détectant la pression placée en amont, celle-ci est réalisée de manière qu'un câble de l'appareil téléphonique soit inversé et qu'un câble supplémentaire allant de la surface d'écriture et de traçage (7) au téléphone soit disposé.

5. Appareil téléphonique selon l'une des revendications 1 à 4, **caractérisé en ce que** la surface d'écriture et de traçage (7) transparente est disposée en format transversal et au-dessous du clavier et des touches de fonction de l'appareil téléphonique.

6. Appareil téléphonique selon l'une des revendications 1 à 5, **caractérisé par** une réalisation de manière telle qu'un téléphone associé à un abonné A établisse une liaison téléphonique vers un téléphone d'un abonné B, que, l'interrupteur de demande d'établissement de la communication (9) étant actif, la surface d'écriture et de traçage (7) de l'abonné A émette une séquence d'identification individuelle par l'intermédiaire du canal D dans le cas du RNIS ou par procédé « dans la bande » dans le cas d'un téléphone analogique, qu'au cours de l'entretien téléphonique, la surface d'écriture et de traçage (7) de l'abonné A attende une séquence d'identification de la surface d'écriture et de traçage (7) de l'abonné B, qu'en cas d'échec de l'établissement de la communication dans un intervalle de temps donné, l'interrupteur de demande d'établissement de la communication (9) soit désactivé, tandis qu'en cas de réussite de l'établissement de la communication, les autres conditions de transmission, telles que le numéro d'identification univoque court de la surface d'écriture et de traçage (7), de la géométrie du moniteur, de la résolution d'affichage, des couleurs et de la vitesse de transmission soient automatiquement accordées et déterminées par le microprocesseur (5) et les composants reliés à ce dernier.

7. Appareil téléphonique selon l'une des revendications 1 à 6, **caractérisé par** une réalisation de l'appareil téléphonique de manière telle qu'un protocole se déroulant automatiquement à l'intérieur commande différents formats d'image et de structure d'image au choix, qu'en mode d'écriture en ligne, des séquences de x, y coordonnées de stylet et des données de commandes de dépose de stylet et de changement de couleur soient transmises et qu'en mode d'écriture en ligne, les surfaces d'écriture et de traçage (7) d'au moins deux abonnés soient inscriptibles et que les enregistrements de l'autre abonné ou des autres abonnées soient représentables par rapport aux propres enregistrements d'écriture.

8. Appareil téléphonique selon l'une des revendications 1 à 7, **caractérisé par** une réalisation de manière telle qu'une touche d'effacement d'image (14) soit intégrée dans la commande du programme de manière qu'à l'appui d'un abonné, les deux ou toutes les surfaces d'écriture et de traçage (7) soient effaçables, qu'une touche d'enregistrement d'image (13) enregistre une page lors de son action, que des touches de sélection d'image (15) puissent être visualisées sur une, les deux ou plusieurs surfaces d'écriture et de traçage (7) et qu'en mode d'affichage, toutes les surfaces d'écriture et de traçage (7) présentent, en règle générale, à tout moment des représentations identiques.
